# EUROPEAN PATENT SPECIFICATION

(11) **EP 3 042 567 B1**
(45) Date of publication and mention of the grant of the patent: **12.06.2019**
(21) Application number: 16150774.4
(22) Date of filing: 11.01.2016
(51) Int. Cl.: A23C 11/10, A23L 25/00

(54) **VEGETABLE YOGHURT-LIKE PRODUCTS AND METHODS FOR PRODUCING THESE**
PFLANZLICHE JOGHURTÄHNLICHE PRODUKTE UND VERFAHREN ZUR HERSTELLUNG DAVON
PRODUITS SIMILAIRES À UN YAOURT VÉGÉTAL ET PROCÉDÉS DE PRODUCTION ASSOCIÉS

(30) Priority: 10.01.2015 BE 201505010
(43) Date of publication of application: 13.07.2016
(73) Proprietor: Alpro Comm. VA, 8560 Wevelgem (BE)
(72) Inventor: Neirynck, Nico, 8560 Wevelgem (BE)
(74) Representative: Vanhalst, Koen

(56) References cited:
- EP-A1- 1 749 448
- EP-A1- 2 476 317
- US-A1- 2003 031 756
- MINHEE PARK ET AL: "Modification of Isoflavone Profiles in a Fermented Soy Food with Almond Powder", JOURNAL OF FOOD SCIENCE, vol. 77, no. 1, 19 December 2011 (2011-12-19), pages C128-C134, XP055202890, ISSN: 0022-1147, DOI: 10.1111/j.1750-3841.2011.02504.x

## Description

### TECHNICAL FIELD

The present invention is situated in the field of food technology. In particular, the invention is directed to vegetable fermented products, more particularly yoghurt-like products on the basis of vegetable products such as soy and almonds, and methods for producing these.

### BACKGROUND

Owing to problems of lactose intolerance and allergies to milk proteins there is a growing trend towards the use of non-dairy fermentation substrates having a vegetable origin. Furthermore, vegetable fermented products that do not contain any animal product are suitable for vegetarians and vegans. In addition, consumers associate vegetable products with healthy and natural foods. Nowadays, fermented soy-based yoghurt-like products with an excellent texture and taste are readily available, as can be read in EP2695522.

Almonds are nutritious as they are rich in proteins and fats and have a high energy value. Their lipid fraction is rich in unsaturated fatty acids, and they therefore possess anticholesterolaemic properties, their proteins are highly digestible and the main carbohydrate they contain is saccharose. On account of their nutritional properties, they are suitable for use in vegetable foods. Moreover, they have excellent sensorial qualities.

Most almond-based food products available today are based on roasted almonds, providing the product with a characteristic "nutty" taste and/or smell. Due to this roasting process, rather high concentrations of pyrazines are detected in these products. These pyrazines may be responsible for the "nutty" taste. In addition, the colour of the existing "nutty" tasting almond-based products is light brown or brownish.

To prepare fermented products, such as yoghurt-like products, on the basis of almonds, one may consider fermenting almond milk. For example, WO 2005/104862 discloses yoghurt-like products that are prepared by fermenting almond milk. However, large amounts of almonds may be required for these products, thereby increasing the production costs. Also, by purely fermenting almond milk it seems to be impossible to obtain a structure which resembles a typical yoghurt consistency. Stabilizers, thickeners and/or carbohydrates need to be added in order to boost the texture of the product, which renders the fermented product less natural.

US patent application US2003/0031756 for example reports on the production of food products by fermenting soy milk and uses several additional sugar sources (including hydrolysed oat juice or almond milk) to improve said fermentation. In said process, almond milk is however fermented, losing a lot of its characteristics.

Consequently, there remains a need in the art for vegetable fermented products, comprising almonds, that are as white as possible, that have a consistency or structure typically for such fermented product and that contain only a low amount of added sugars and fats, and which do have an excellent taste and flavour, preferably a typical almond taste and flavour such as marzipan. It is further desired that such products are obtained by simple processes at low cost.

### SUMMARY OF THE INVENTION

In an attempt to address one or more of the above discussed needs in the art, a roasted almond paste, which is the most common type of almond paste, was added to soy yoghurt. The yoghurt-like product was light brownish in colour and large amounts of sugar had to be added in order to obtain a good taste. The addition of large amounts of sugar, e.g. at least 5% of sugar but even up to 10% of sugar, was necessary when using a roasted almond paste: the roasted taste of the almond could only match the sour taste of a yoghurt (fermented product) upon addition of lots of sugar. Such product could hence not qualify as a healthy or "natural" vegetable fermented product. Next to that, the resulting colour, which was in the best case light brownish, is not at all desired in the attempt to invent a vegetable fermented product the can be positioned of found in the plain segment of the fermented products' category.

The inventors have now provided a new yoghurt-like product, to be positioned/found in the plain category, which unexpectedly has a yoghurt-like, smooth and creamy texture, is ivory-white in colour, contains a low amount of fats and to which only small amounts of sugar have to be added in order to obtain a reasonably short fermentation time and a good taste and flavour. Such a product can be obtained by adding a non-roasted, preferably blanched, almond paste to soy yoghurt or fermented soy milk.

The present invention thus provides a vegetable fermented product, characterized in that said product comprises a fermented soy milk product and a non-roasted almond paste.
Aspect 1: The invention provides a vegetable fermented product having a concentration of pyrazines of below 30 ppb comprising:
   - a total protein content of between 3.5 and 4.5 % w/w;
   - a total fat content of between 2 and 4 % w/w; and
   - a total carbohydrate content of between 2 and 4 % w/w;
   wherein said product is produced by a method comprising the steps of:
   a) fermenting soy milk with lactic acid bacteria,
   b) providing non-roasted almond paste, and
   c) mixing said almond paste with the fermented soy milk obtained in step a) in a ratio of about 97.5 to 99.5 % w/w of fermented soy milk to about 0.5 to 2.5 % w/w of non-roasted almond paste,
   wherein after mixing step c) no further fermentation step is applied to the product.
   The fermented product according to the invention is characterized as having a concentration of pyrazines of below 30 ppb, preferably below 20 ppb, preferably below 10 ppb, more preferably below 5 ppb, most preferably below 2 ppb.
   Preferably, said vegetable fermented product comprises about 98 to 99 % w/w of fermented soy milk, and about 1 to 2% of non-roasted almond paste.
   Preferably, said vegetable fermented product comprises between 7 and 9 % w/w hulled soybeans, more preferably about 8 % w/w hulled soybeans.
   Preferably, said fermented soy milk is prepared as follows: to 8000 ml soy milk, having a fat content of between about 180 and 190 g, a protein content of between about 310 and 330 g, a total sugar content of between about 62 and 66 g and a pH of between 7.1 and 7.3, sucrose was added bringing the total carbohydrate content to between about 290 and 310 g, as well as citric acid to lower the pH to about 6,5 and minor amounts (approximately 4.5 to 5.5 g) of sea salt were added. Preferably, said soy milk is fermented with lactic acid bacteria (e.g. *Streptococcus thermophilus* and/or *Lactobacillus bulgaricus*) up to a pH of below 4.7, preferably of about 4.5.
Aspect 2. The invention provides a product according to aspect 1, comprising a blanched, non-roasted almond paste
Aspect 3. The invention provides a product according to aspect 1 or 2, having an ivory or ivory-white colour, with the following Lab colour values:
   - L: between 80 and 83,
   - a: between -1 and 2,
   - b: between 8 and 13.
Aspect 4. The invention provides a product according to any one of aspects 1 to 3, characterized as having a benzaldehyde concentration of between 1000 and 4000 µg/100g, preferably between 2000 and 3000 µg/100g, most preferably between 2400 and 2800 µg/100g.
   Preferably, the fermented product according to the invention is characterized as having the following aldehyde concentrations:
   - 2-methylpropanal between 0.5 and 1.5, preferably about 1.0 µg/100g,
   - 2-methylbutanal between 0.1 and 1.1, preferably about 0.6 µg/100g,
   - 3-methylbutanal between 0.25 and 0.45, preferably about 0.35 µg/100g,
   - hexanal between 4.2 and 5.2, preferably about 4.70 µg/100g, and
   - benzaldehyde between 2400 and 2800, preferably about 2600 µg/100g.
Aspect 5. The invention provides a product according to any one of aspects 1 to 4, being a yoghurt-like product having a total fat content of between 2.5 and 3.5 % w/w, preferably comprising between about 0.3 and 0.5 % w/w saturated fats, between about 0.9 and 1.1 % w/w mono-unsaturated fats, and between about 1.3 and 1.4 % w/w poly-unsaturated fats.
Aspect 6. The invention provides a product according to any one of aspects 1 to 5, being a yoghurt-like product having a total carbohydrate content of between between 2.5 and 3.5 % w/w, preferably comprising between 2.0 and 2.3 % w/w mono and disaccharides, and between 0.9 and 1.1 % w/w fibers.
Aspect 7. The invention provides a product according to any one of aspects 1 to 6, having a sucrose content of between 0.5 and 3% w/w, preferably between 0.5 and 2.5% w/w.
Aspect 8. The invention provides a product according to any one of aspects 1 to 7, being a yoghurt-like product having a viscosity expressed as a Bostwick value of between 30 and 75.
Aspect 9. A vegetable fermented product having a concentration of pyrazines of below 30 ppb comprising:
   - a total protein content of between 2% and 3.5% w/w;
   - a total fat content of between 1 and 3 % w/w; and
   - a total carbohydrate content of between 1 and 3 % w/w,
   wherein said product is produced by a method comprising the steps of:
   a) fermenting soy milk with lactic acid bacteria,
   b) providing non-roasted almond paste, and
   c) mixing said almond paste with the fermented soy milk obtained in step a) in a ratio of about 97.5 to 99.5 % w/w of fermented soy milk to about 0.5 to 2.5 % w/w of non-roasted almond paste,
   wherein after mixing step c) no further fermentation step is applied to the product.
Aspect 10. The invention provides a product according to any one of aspects 1 to 9, additionally comprising one or more ingredients selected from the group comprising: calcium sources (e.g. tricalcium phosphate) stabilizers (e.g. pectin), antioxidants (tocopherol-rich extract, and/or ascorbyl palmitate), acidity regulators (e.g. sodium citrate and/or citric acid), sweeteners, flavourings, vitamins (e.g. B12, D2, and/or E), health-related supplements, and salts (e.g. sea salt).
Aspect 11. The invention provides a product according to any one of aspects 1 to 10, comprising calcium at a concentration of about 120 ppm.
Aspect 12. The product according to any one of aspects 1 to 11, wherein said non-roasted almond paste is obtained by blanching the almonds and subsequently grinding the blanched almonds to a volume weighed average particle diameter of below 30 µm.
Aspect 13. The product according to any one of aspect 1 to 12, wherein said non-roasted almonds are dried after blanching to a moisture content of between about 4% and about 7%, preferably between about 5% and about 6%, prior to the grinding step.
Aspect 14. The invention provides a method for producing a vegetable fermented product comprising the steps of:
   a) fermenting a soy milk with lactic acid bacteria,
   b) providing a non-roasted, preferably blanched, almond paste, and
   c) mixing said almond paste with the fermented soy milk obtained in step a) in a ratio of 97.5 to 99.5 % w/w of fermented soy milk to about 0.5 to 2.5 % w/w almond paste, wherein after mixing step c) no further fermentation step is applied to the product.
Aspect 15. The method according to aspect 14, for producing a vegetable fermented product comprising:
   - a total protein content of between 3.5 and 4.5 % w/w;
   - a total fat content of between 2 and 4 % w/w; and
   - a total carbohydrate content of between 2 and 4 % w/w, or
   for producing a vegetable fermented product comprising:
   - a total protein content of between 2% and 3.5% w/w;
   - a total fat content of between 1 and 3 % w/w; and
      - a total carbohydrate content of between 1 and 3 % w/w.

   Preferably, said vegetable fermented product comprises between 7 and 9 % w/w hulled soybeans, more preferably about 8 % w/w hulled soybeans.
   Preferably, said fermented soy milk is prepared as follows: to 8000 ml soy milk, having a fat content of between about 180 and 190 g, a protein content of between about 310 and 330 g, a total sugar content of between about 62 and 66 g and a pH of between 7.1 and 7.3, sucrose was added bringing the total carbohydrate content to between about 290 and 310 g, as well as citric acid to lower the pH to about 6,5 and minor amounts (approximately 4.5 to 5.5 g) of sea salt were added. Preferably, said soy milk is fermented with lactic acid bacteria (e.g. *Streptococcus thermophilus* and/or *Lactobacillus bulgaricus*) up to a pH of below 4.7, preferably of about 4.5.
Aspect 16. The invention provides a method according to aspect 14 or 15, wherein step b) comprises the steps of:
   b1) blanching non-roasted almonds, and
   b2) grinding the blanched almonds such as to form a blanched, non-roasted almond paste, preferably an almond paste having a volume weighed average particle diameter of below 30 µm.
Aspect 17. The invention provides a method according to anyone of aspects 14 to 16, wherein the blanched, non-roasted almonds are dried after blanching to a moisture content of between about 4% and about 7% (w/w), preferably between about 5% and about 6%, prior to the grinding step.
Aspect 18. The invention provides a method according to any one of aspects 14 to 17, wherein in step c) one or more ingredients selected from the group comprising: stabilizers, antioxidants, acidity regulators, sweeteners, flavourings, health-related supplements, and salts, are mixed with the fermented soy milk.

### DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The term also encompasses "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

When a numerical value is used to indicate temperature, said value encompasses the exact numerical value as such, as well as all numerical values that would be rounded up to said exact numerical value according to standard mathematical and/or statistical regulations. For example, a temperature of "90°C", encompasses the values of 89.5; 89.6; 89.7; 89.8; 89.9; 90.0; 90.1; 90.2; 90.3; and 90.4°C. When this is used in combination with the term "about", said temperature encompasses also temperatures that differ from said exact temperature by 0.1, 0.2, 0.3, 0.4, 0.5, 0.6, 0.7, 0.7, 0.9, or 1.0 °C, both in the positive or negative range.

Similarly, when a period of time is indicated using a numerical value such as "about 1 hour" or "about 60 minutes", said value encompasses the exact time indicated as well as periods that deviate therefrom by e.g. less than one minute, half a minute, or 1, 2, 3, 4, 5, 6, 7, 8, 9, 10, 11, 12, 13, 14 or 15 minutes. Analogously, the term "about 1 hour" encompasses about 45, 50, 55 minutes to about 65, 70, and 75 minutes, as well as any time in between.

As used throughout the present disclosure, the terms "concentration" and "content" are used interchangeably and refer to the weight concentration or mass fraction of a constituent, i.e. the mass of a constituent divided by the total mass of all constituents, and can be expressed in mg per kg or parts per million (ppm), or microgram per kg or parts per billion (ppb).

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

As noted, the present inventors have found that vegetable yoghurt-like products comprising almonds can be obtained through the addition of a non-roasted, preferably blanched, almond paste to soy yoghurt.

The products of the invention do not contain added lactose, and/or other animal- or dairy-derived products or components. Accordingly, they can be denoted as "vegetable products".

The term "vegetable" or "of vegetable origin" as used herein indicates that the product is animal-free. The term "animal-free" as used herein refers to a product to which no components of animal origin, such as dairy proteins, lactose, or other animal components were added. Unintended traces of components of animal origin may however be present. Preferably, the fermented product of the invention is a substantially vegetable product, i.e. a product wherein only vegetable components and/or synthetic components derived from vegetable sources, are present. Unintended traces of components of animal origin cannot be excluded and hence may be present.

A "fermented product" as used herein denotes a food product, a food ingredient or a functional food obtained through fermentation.

The term "food" or "food product" is used herein in a broad sense, and covers food for humans as well as food for animals (i.e. a feed). Preferably, the food is for human consumption. The food may be in the form of a solution or as a solid, depending on the use and/or the mode of application and/or the mode of administration.

The term "food ingredient" as used herein refers to a formulation which is or can be added in the preparation of other foodstuffs. The food ingredient may be in the form of a solution or as a solid, depending on the use and/or the mode of application and/or the mode of administration.

With the term "fermented soy milk product" is meant herein a soy bean-derived food product or food ingredient, obtained through fermentation of soy milk. Non-limiting examples of fermented soy milk products include soy yoghurt or soy drink yoghurt.

Additional ingredients may be included in the products of the invention.

Stabilizer may optionally be included in the products of the invention. The term "stabilizer" as used herein refers to a food ingredient that inhibits the reaction between two or more other ingredients and/or the separation of ingredients. Non-limiting examples of stabilizers include pectins, alginates, carrageenans, locust bean gum and xanthan gum. Preferably, pectin is added as stabilizer to yoghurt-like products as described herein.

Another optional ingredient that may be included in the products of the invention is antioxidant. With the term "antioxidant" is meant herein a food ingredient that inhibits the oxidation of the other ingredients. Non-limiting examples of antioxidants are ascorbyl esters (such as, e.g., ascorbyl palmitate), tocopherol-rich extracts, and/or EDTAs.

Yet another optional ingredient suitable for use in the products of the invention is an acidity regulator or buffering agent. The terms "acidity regulator" and "buffering agent" are used as synonyms herein and refer to a food ingredient that minimizes changes of pH of the food. Non-limiting examples of acidity regulators are phosphates, sodium citrate and citric acid.

Sweeteners and/or other flavourings may also be optionally included in the products of the invention. The term "flavouring" as used herein generally refers to any substance that may be safely used in food, the function of which is to impart flavour. Non-limiting examples of sweeteners and/or flavourings are sugar, including sucrose, glucose, fructose, maltose, inverted sugar, or any other sweet monosaccharide or disaccharide, or sweet polyhydric alcohol, sugar cane juice, stevia extract, and/or some other suitable sweetener and/or flavouring.

Another optional ingredient that may be included in the products of the invention is a health-related supplement, i.e. a food additive that is intended to confer a health benefit to the consumer. Non-limiting examples of health-related supplements include calcium carbonate (CaCO₃), vitamins such as vitamin A, vitamin B2, vitamin B12, vitamin D, and vitamin E, zinc, fibers, proteins, potassium, phosphorus, fatty acids (e.g. omega 3, omega 6), oligosaccharides, and/or any other suitable health-related supplement. Preferably, said health-related supplement may be selected based at least in part on a neutral-taste quality that may have little or no impact on the overall taste of the final product.

Another optional ingredient that may be included in the products of the invention is a calcium source. Non-limiting examples of suitable calcium sources are tri-calcium citrate and tri-calcium phosphate.

Also optionally, a salt agent may be included in the products of the invention. Said salt agent may have a flavouring, stabilizing and/or buffering effect. Non-limiting examples of suitable salt agents include: sea salt (e.g. sodium chloride), a potassium phosphate (e.g. monopotassium phosphate (KH₂PO₄), dipotassium phosphate (K₂HPO₄), tripotassium phosphate (K₃PO₄)), and a sodium phosphate (e.g. disodium phosphate (Na₂HPO₄)).

The term "almond" as used herein refers to the fruit of the almond tree *Prunus dulcis.* The almond consists of a shell, which is a thick leathery grey-green coat, and a brown seed-coat, called the skin, with the edible seed, commonly called the nut or kernel, inside. Generally, one seed is present, but occasionally there are two.

As used herein, the term "almond paste" refers to any ground or liquefied form of almonds and encompasses, for example, but without limitation, almond butter, almond cream or any combination thereof.

Preferably, the almond paste has a volume weighted average particle diameter (D[4,3]) of below 30 µm. Such a volume weighted average particle diameter (D[4,3]) can be determined using e.g. a Beckman-Coulter laser diffraction apparatus of type LS 230, following the instructions of the manufacturer. This grinding process results in freeing of the oil from the almonds, resulting in a paste, rather than just in smaller particles. This increases the smoothness and almond taste of the final product. The almond paste is a fat-soluble paste, only containing that % of water which was already present in the almonds before grinding (typically between about 4 and about 7 % w/w).

Typically, the almonds that are used in the products and methods of the invention are not roasted. The terms "roasting" and "roasted" and the like refer to the process of heating, in particular dry heating almonds at elevated temperatures, in particular at temperatures at least above 120°C, mostly between 180 and 230 °C, in order to change their flavour and/or colour.

The products of the present invention are characterized in that they have a low concentration of pyrazines.

In general, the term "pyrazine" refers to a heterocyclic aromatic organic compound, which has a 6-membered ring structure consisting of four carbon atoms and two nitrogen atoms.

As used herein, the terms "pyrazines concentration" or "concentration of pyrazines" denote the sum of the individual concentrations of 2,6-dimethylpyrazine; 2-ethyl-3-methylpyrazine; 2-ethyl-3,5-dimethylpyrazine and 2-ethyl-3,6-dimethylpyrazine. These alkylated pyrazines (or alkylpyrazines) consist of a pyrazine ring with alkyl substituents attached to the ring. Typically, such alkylated pyrazines may be formed as volatiles during the Maillard reaction that occurs upon (over-)heating food (e.g. through roasting) and these alkylated pyrazines may confer a "roasted" flavour and odor to the heated foods.

The products of the present invention have a concentration of pyrazines of below 30 ppb, such as below 20 ppb, 10 ppb, or even 5 or 2 ppb. Typically, said pyrazines are alkylated pyrazines. The concentration of aldehydes and pyrazines in the product of the invention is preferably determined using HeadSpace Solid-Phase Micro-Extraction (HS-SPME) and/or GasChromatography-Mass-Spectrometry (GC-MS) technologies in order to achieve a (semi)quantitative measurement.

Preferably, the almonds that are used in the products and the methods of the invention are blanched almonds. As used herein, the term "blanched almonds" refers to de-shelled (also called shelled) almonds (i.e. almonds of which the shell has been removed) of which the seed-coat or skin has been removed. Hence, blanched almonds are de-shelled and de-skinned almonds. Blanched almonds may be obtained by treating de-shelled almonds with hot water to soften the seed-coat such that it can be removed.

The products of the invention are further characterized in that they have an ivory or ivory-white colour. Such colour is generally associated with natural foods, contrary to the light brown or brownish coloured products obtained by using roasted almonds.

By blanching the almonds the brown skin of the almonds is removed. That way a vegetable fermented product can be obtained with a very light colour, such as the mentioned ivory or ivory-white colour.

By not roasting the almonds, certain enzymes within the almonds are not or not fully inactivated. By using non-roasted almond paste, a typical marzipan flavour can be obtained in the end-product, probably induced by the relative high benzaldehyde or other aldehyde concentrations.

### Almond-based yoghurt-like product

In preferred embodiments, the fermented product is a yoghurt-like product
comprising:
- about 97.5 to 99.5 % w/w of fermented soy milk, and
- about 0.5 to 2.5 % w/w of non-roasted, preferably blanched almond paste.
Preferably, said vegetable fermented product comprises between 7 and 9 % w/w hulled soybeans, more preferably about 8 % w/w hulled soybeans.
Preferably, said vegetable fermented product comprises:
- a total protein content of between 3.5 and 4.5 % w/w;
- a total fat content of between 2 and 4 % w/w; and
- a total carbohydrate content of between 2 and 4 % w/w;

Preferably, said fermented soy milk is prepared as follows: to 8000 ml soy milk, having a fat content of between about 180 and 190 g, a protein content of between about 310 and 330 g, a total sugar content of between about 62 and 66 g and a pH of between 7.1 and 7.3, sucrose was added bringing the total carbohydrate content to between about 290 and 310 g, as well as citric acid to lower the pH to about 6,5 and minor amounts (approximately 4.5 to 5.5 g) of sea salt were added. Preferably, said soy milk is fermented with lactic acid bacteria (e.g. *Streptococcus thermophilus* and/or *Lactobacillus bulgaricus*) up to a pH of below 4.7, preferably of about 4.5.
After fermentation, the almond paste is added as disclosed herein. Said mixture is not subjected to a further fermentation step in order to preserve the taste and flavour intensity of the almond paste in the final product.

The product according to the invention typically has an ivory or ivory-white colour, preferably with the following Lab colour values:
- L: between 80 and 83,
- a: between -1 and 2,
- b: between 8 and 13.

Preferably, the fermented product according to the invention is characterized as having a concentration of pyrazines of below 30 ppb, preferably below 20 ppb, preferably below 10 ppb, most preferably below 5 or even 2 ppb.
Preferably, the fermented product according to the invention is characterized as having the following aldehyde concentrations:

| | |
|---|---|
| - 2-methylpropanal | between 0.5 and 1.5, preferably about 1,0 µg/100g, |
| - 2-methylbutanal | between 0.1 and 1.1, preferably about 0,6 µg/100g, |
| - 3-methylbutanal | between 0.25 and 0.45, preferably about 0,35 µg/100g, |
| - hexanal | between 4.2 and 5.2, preferably about 4,70 µg/100g, and |
| - benzaldehyde | between 1000 and 4000, preferably between 2400 and 2800, preferably about 2600 µg/100g. |

The yoghurt-like product according to the invention typically has a total protein content of between 3.5 and 4.5 % w/w.

The yoghurt-like product according to the invention also typically has a total fat content of between 2 and 4% w/w, preferably between 2.5 and 3.5 % w/w, preferably comprising between 0.3 and 0.5 %w/w saturated fats, more preferably of about 0.4 % w/w saturated fats, about between 0.9 and 1.1 %w/w mono-unsaturated fats, more preferably of about 1.0 % w/w mono-unsaturated fats and between 1.3 and 1.4 % w/w unsaturated fats, more preferably about 1.4 % w/w poly-unsaturated fats.

The yoghurt-like product according to the invention also typically has a total carbohydrate content of between 2 and 4% w/w, preferably between 2.5 and 3.5 % w/w, preferably comprising between 2.0 and 2.3 % w/w mono and disaccharides, more preferably of about 2.2 % w/w mono and disaccharides and between 0.9 and 1.1 % w/w fibers, more preferably about 1.1 % w/w fibers.
The products of the invention are further characterized in that they have an ivory or ivory-white colour. Such colour is generally associated with natural foods and particularly with yoghurts or drink yoghurts or their plant-based alternatives of the plain segment of that fermented diary products' category.
The products of the invention typically have the following Lab colour values: L between 80 and 83, a between -1 and 2, b between 13 and 8 upon production. This colour remains quite stable during the shelf-life of the product, but the b-component can drop to between 9 and 8 after 7 weeks of refrigerated shelf-life.
The products of the invention are further characterized in that they have a viscosity expressed as a Bostwick value (movement of the product in mm 20 sec after 'opening of the gate', measured at 7 °C) of between 50 and 75 mm (1 day after production (chilled storage)) and of between 30 and 55 mm (3 weeks after production (chilled storage)).

### Process for producing a vegetable fermented product based on almonds

Another aspect of the invention relates to a method for producing a vegetable fermented product comprising the steps of:
a) fermenting a soy milk,
b) providing a non-roasted, preferably blanched, almond paste, and
c) mixing the almond paste with the fermented soy milk, wherein after step c), the mixture is not subjected to a further fermentation step.

The steps of this method will be further clarified in the following passages.

As used herein, the term "soy milk" refers to a beverage made from soybeans. It is usually an aqueous dispersion comprising soybean protein and oil.

Soy milk prepared by any known method may be used in the methods of the invention. A method for preparing soy milk generally entails hydrating whole or defatted soybeans by e.g. soaking in water, heating, grinding to obtain slurry, and removing the okara (soy pulp fiber) from the soy milk by a method such as filtration. For example, a soy milk preparation known by the name of "tonyu" may be used for producing the fermented product of the invention. Tonyu is obtained from whole soybeans and is the subject of an AFNOR standard (NF V 29-001). Briefly, to obtain tonyu, soybeans are shelled and then mixed with water and ground hot. The ground product is separated after settling out so as to separate the solid residue, called "okara", from the soy milk, which constitutes the tonyu.

### Formulation of the soy milk

Optionally, the method may further comprise a step of formulating the soy milk prior to fermentation.

For example, a carbon source may be added to the soy milk. As used herein, the term "carbon source" is used in reference to any compound which may be utilized by the bacterium as a source of carbon for bacterial growth and/or metabolism. Said carbon source may be utilized by the bacteria, thereby promoting (e.g. accelerating) the fermentation process. Non-limiting examples include carbohydrates, e.g. monosaccharides such as glucose or fructose, sucrose, disaccharides, oligosaccharides, acids, alcohols, aldehydes, ketones, amino acids and peptides. Preferably, a carbohydrate is added, more preferably sugar and/or fructose. The addition of a carbon source is especially desirable when the amount of carbohydrates naturally present in the soy milk is too small. The amount of added carbohydrate is depending on the type. When sugar (sucrose) is used, an amount of e.g. 2 to 3 % w/w is typically added.

Minor amounts of edible organic acids, e.g. citric acid, lactic acid, or their salts, e.g. sodium citrate, may be added to the soy milk to decrease the pH. The final pH should preferably range between 6 and 7, more preferably about pH 6.5.

### Step a) Fermenting soy milk

The step of fermenting the soy milk may comprise inoculating a bacterial culture into the soy milk and fermenting the same.

Any conventional process for the fermentation of soy milk may be applied in the methods of the invention, such as, for example the soy milk fermentation process as disclosed in EP-A2-0521331.

Soy milk is fermented with lactic acid bacteria. The lactic acid bacterium may be any lactic acid producing strain, preferably a lactic acid producing strain belonging to a genus selected from the group comprising *Lactobacillus* sp., *Streptococcus* sp., *Lactococcus* sp., *Leuconostoc* sp., *Bifidobacterium* sp. and *Pediococcus* sp, such as a lactic acid producing strain belonging to a species selected from the group comprising *Lactobacillus acidophilus, Lactobacillus bulgaricus, Streptococcus lactis, Streptococcus cremoris, Streptococcus durans, Streptococcus thermophilus, Lactococcus lactis, Leuconostoc citrovorum, Bifidobacterium bifidum, Bifidobacterium longum, Bifidobacterium breve, Bifidobacterium infantis* and *Bifidobacterium animalis.* These lactic acid bacteria may be used alone or in combination. Preferably, the bacterial culture comprises a *Streptococcus thermophilus* strain.

The bacterial culture may be inoculated as living bacteria or in a frozen or freeze-dried state. When inoculating the bacterial culture as living bacteria, a bulk starter culture may be prepared, which may then directly be added to the soy milk.

The amount of inoculum may range between 10³ and 10⁹ CFU/ml, depending on the type of inoculum applied and the temperature and time of fermentation.

The fermentation temperature and the fermentation time may be appropriately decided depending on the type of the lactic acid bacterium to be used. Each bacterial culture has its optimum growth conditions and these conditions are usually aimed at. Usually, the fermentation is carried out at temperatures between 15°C and 45°C for between 3 and 24 hours. As a general rule, fermentation is allowed to proceed until the acidity of the fermentation mixture has reached a pH below 4.7 or 4.6.

Fermentation may be carried out with any conventional device or fermentation tank or vessel used for conventional fermentation of e.g. cow milk.

### Step b) Providing a non-roasted, preferably blanched, almond paste

In preferred embodiments of the methods of the invention, step b) comprises: b1) blanching the almonds, b2) optionally drying the blanched almonds to a moisture content of between about 4% and about 7%, preferably between 5% and 6%, such as to about 5.5%, and b3) grinding the blanched almonds or the dried blanched almonds such as to form an almond paste, preferably an almond paste having a volume weighed average particle diameter (D[4,3]) of below 30 µm.

As noted, the almonds that are used in the products and methods of the invention are not roasted. This means that the methods as taught herein do not encompass a dry heating step at temperatures above 120°C, prior to grinding the almonds.

### Blanching almonds

Also preferably, blanched almonds are used in the products and methods of the invention. The term "blanching" as used herein denotes the process of removing the skin or seed-coat from de-shelled almonds through a wet heat treatment, typically by plunging the almonds in boiling water. The skin of the almond softens through the treatment with boiling water and can easily be removed.

Blanching of the almonds may be achieved using available apparatuses and known techniques for blanching almonds, for example, but without limitation, by using a blancher, such as the blancher supplied by Maseto Technologies.

In embodiments, the blanching step is carried out for between about 2 min and about 10 minutes at between about 100°C and 120°C, Preferably for between about 5 min and about 10 min at about 100°C, more preferably for about 5 min at about 100°C, in boiling water.

### Drying almonds (optional)

Preferably, a drying step is performed after blanching the almonds to reduce the moisture content of the almonds. Said drying step reduces the risk that moulds or yeasts or bacteria will grow on the blanched almonds, thereby prolonging the shelf life of the blanched almonds. In addition, the capacity of further processing steps advantageously increases upon drying the blanched almonds as compared to non-dried blanched almonds with a higher moisture content.

Preferably, the blanched almonds are dried to a moisture content of between about 4% and about 7%, preferably between about 5% and about 6%, such as to about 5.5%.

Drying is typically performed by dry heating the almonds at elevated temperatures. Preferably, the drying step is carried out at between about 80°C and about 100°C, preferably between about 80°C and about 95°C, more preferably between about 80°C and about 90°C, such as at about 90°C. The time of said heat treatment is inversely related to the heating temperature. In essence, the heat treatment should be sufficient to sufficiently reduce the moisture content of the almonds, but should not be so high as to roast the almonds.

In embodiments, the drying step is carried out by heating the blanched almonds at about 80°C for between about 30 min and about 3 hours, at about 90°C for between about 20 min and about 2 hours, preferably about 90 min, at about 95°C for between about 10 min and about 1 hour.

### Grinding almonds

The methods as taught herein encompass grinding (optionally but preferably dried) blanched, non-roasted almonds to obtain an almond paste having a suitable particle size, preferably an almond paste having a volume weighted average particle diameter (D[4,3]) of below 30 µm. Optionally, other components, preferably components in powder form or oil-soluble components (e.g. emulsifiers), may be added before or during this grinding step.

The term "grinding" as used herein denotes the process of crushing almonds to particles with a suitably small particle size.

Preferably, grinding is performed by several cutting and/or milling steps. The size of the almonds, may be roughly reduced in a first step, e.g., by cutting (e.g. in a Stephan cutter) or by milling (e.g. in a ball mill or bead mill), resulting in a first almond paste with only part of the oil liberated. In a second dry grinding step the particle size may be further reduced such that nearly all almond cells are broken, thereby liberating the almond content, which is mainly composed of almond oil. This can be performed by milling (e.g. in a ball mill). The resulting average particle size (D[4,3]) will be typically below 30 µm.

Grinding of the almonds may be achieved using available apparatus and known techniques for producing almond pastes, for example, but without limitation, by using a Stephan cutter, a Bühler cutting mill type SCS-4, a ball mill such as a Beater Blade Mill N40 or the like or any combination thereof.

### Step c): Mixing

In a further step of the methods as taught herein, the non-roasted, preferably blanched almond paste is mixed with the fermented soy milk product.

Optionally, one or more additional ingredients selected from the group comprising: stabilizers, antioxidants, acidity regulators, sweeteners, flavourings, health-related supplements, and salts may be mixed with the fermented soy milk product.

These additional ingredients may be mixed with the almond paste prior to, simultaneous with, or after addition to the fermented soy milk product or they can be mixed with the fermented soy milk product prior to addition of the almond paste. In both cases, the mixture is not subjected to a further fermentation step.

Mixing may be performed e.g. using a high shear mixer, a lab mixer, a liquiverter, a rotor-stator type mixer, a blender, etc..

### Step d): Heat treatment

The fermented product may then optionally be pasteurized or sterilized for the time necessary for obtaining the desired pasteurizing or sterilizing value, resulting in a product having a longer shelf life. Accordingly, in a next step of the methods as taught herein, the product may be subjected to a heat treatment.

Preferably, the product is subjected to an ultra-high temperature - short time (UHT-ST) or ultra-high temperature (UHT) heat treatment, shortly termed UHT treatment or UHT. The terms "UHT-ST treatment", "UHT treatment" and "ultra-high temperature processing" are synonyms and denote the sterilization of food by heating it for an extremely short period, preferably between 1 and 10 seconds, at a temperature exceeding 135 °C, such as e.g. at a temperature of between 140 °C and 150 °C, which is the temperature required to kill any residing bacteria or spores.

### Step e): Packaging

The final product may finally be packed in any type of recipient, bottle or package. Non-limiting examples are e.g. the Tetrapak® cardboard packages, plastic, PET, or glass tons, cans or bottles, for distribution and sale to consumers.

The present invention will be described in greater detail below with the aid of the examples which follow. It goes without saying, however, that these examples are given by way of illustration of the invention and does not constitute in any manner a limitation thereof.

### EXAMPLES

### Example 1: Preparation of a blanched, non-roasted almond paste

A blanched, non-roasted almond paste was prepared according to the method of the invention.

In particular, de-shelled almonds were cleaned and sorted to remove all foreign material, damaged and broken almonds, and free skins.

The almonds were then blanched in a blancher (Maseto). The almonds were first heated for 5 min at 100°C in boiling water to soften the skin, which was subsequently removed with rubber rollers.

After blanching, the almonds were dried for 90 min at 90°C. The moisture content was thereby reduced from about 12% to about 5.5%.

The dried blanched almonds were then first roughly ground to below 100 µm in a first grinder (Dr.-Ing. Bauermeister GMBH), followed by ball milling to below 30 µm using a ball mill (Beater Blade Mill N40).

The blanched non-roasted almond paste was finally filled in drums.

### Example 2: Preparation of a yoghurt-like product on the basis of soy and almonds

A yoghurt-like product based on almonds according to the invention was prepared as follows:
Soy milk (Provamel, Alpro-Wevelgem, Belgium) was supplemented with sucrose, citric acid and sea salt (formulated soy milk). To 8000 ml soy milk, having a fat content of 184 g, a protein content of 320 g, a total sugar content of 64 g and a pH of 7.2, sucrose was added, bringing the total carbohydrate content to 300 g, as well as citric acid to lower the pH to about 6.5 and minor amounts (approximately 5 g) of sea salt.
The formulated soy milk was subjected to fermentation at 43°C until pH = 4.5 was reached using a conventional yoghurt culture comprising *Streptococcus thermophilus* and *Lactobacillus bulgaricus.*

After fermentation, the fermented soy milk product (white mass) was cooled to 10°C and mixed with an almond paste in a ratio 98.7 % w/w white mass/1.3 % w/w almond paste. Some additional components were added to the mixture such as tri-calcium citrate, pectin, sodium citrate, citric acid, flavouring, antioxidants (tocopherol-rich extract, ascorbyl palmitate), and vitamins (B12, D2, E).

The end-product of this example comprises: water, hulled soy beans (7,8% w/w), sugar (2.2% w/w), almonds (1,3% w/w), tri-calciumcitrate, stabiliser (e.g. pectin), acidity regulators (e.g. sodium citrate, citric acid), flavouring, sea salt, antioxidants (e.g. tocopherol-rich extract, ascorbyl palmitate), yogurt cultures (e.g. Streptococcus thermophilus, Lactobacillus bulgaricus), and vitamins (B12, D2, E).

Composition of such an end-product: the total protein content was about 3.88 % w/w, the total carbohydrates content was about 3.06 % w/w of which about 2.18 % w/w were mono and disaccharides and about 1.06 % w/w were soluble and insoluble fibers, the total fat content was about 2.81 % w/w of which about 0.41 % w/w was saturated fat, about 0.99 % w/w was mono-unsaturated fat and about 1.41 % w/w was poly-unsaturated fat.

### Example 3: Determination of aldehydes (acetaldehyde, 2-methylpropanal, 2-methylbutanal, 3-methylbutanal, diacetyl, hexanal, furfural, methional, benzaldehyde, and phenylacetaldehyde) in the yoghurt-like product on the basis of soy and almonds through HeadSpace Solid Phase MicroExtraction (HS-SPME) and GasChromatography-MassSpectrometry (GC-MS)

### Sample preparation

4 mL of the yoghurt-like product on the basis of soy and almonds (the sampled product) of example 2 was brought in a CombiPal extraction vial and deuterated benzaldehyde was added as an internal standard (concentration in the extraction vial was 1 µg/L). The extraction vial was sealed with a magnetic bimetal crimp cap with silicone/Teflon septum.

### Extraction

The selective extraction of aldehydes from the sampled product through HS-SPME is based on loading the extraction fiber with derivatizing agent PFBOA [o-(2,3,4,5,6-pentafluorobenzyl)-hydroxylamine] and happened in an automated way by use of a CombiPal autosampler (CTC Analytics, Zwingen, Switzerland).

Some details: Extractionfiber: 65 µm PDMS/DVB (Supelco, Bellefonte, PA, USA). Loading the extraction fiber with PFBOA: 10 minutes at 30°C. Extraction and derivatization of the aldehydes: 30 minutes at 50°C. Agitator (autosampler): 250 rounds per minute.

### GC-MS details and conditions

GC: Ultra Trace gas chromatograph (Interscience, Louvain-la-Neuve, Belgium). Thermal desorption of derivatizated aldehydes: split/splitless injector, 250°C, 3 minutes, split ratio: 1/10. Capillary column: RTX-1 (Restek Corporation, Bellefonte, PA, USA).

Oven programme: 50°C (2 minutes at 50 °C), temperature raise speed: 6°C/minute, endtemperature: 250°C.

MS: Dual Stage Quadrupool (DSQII, Interscience, Louvain-la-Neuve, Belgium); electron ionisation (EI: 70 eV); source temperature: 240°C; electron multiplier: 1445 V; selected ion monitoring: m/z=181; SIM width: 1.0; dwell time: 100 ms.

### Quantitative determination of aldehydes

Known concentrations of aldehyde reference components (e.g. benzaldehyde) were subjected to the same extraction and detection procedure as the sampled product. For a quantitative determination of benzaldehyde in sampled product, an external 8-points calibration curve (concentration range: 50 to 1500 µg aldehyde reference component per L mQ-water) was made (X-axis: concentration of benzaldehyde; Y-axis: surface benzaldehyde divided by surface internal standard).

### Results

Measured aldehyde levels in the sampled product (µg per 100g):

| | |
|---|---|
| 2-methylpropanal | 1,04 |
| 2-methylbutanal | 0,60 |
| 3-methylbutanal | 0,34 |
| hexanal | 4,70 |
| benzaldehyde | 2602. |

### Example 4: Determination of pyrazines (2,6-dimethylpyrazine; 2-ethyl-3-methylpyrazine; and 2-ethyl-3,(5 or 6)dimethylpyrazine) in the yoghurt-like product on the basis of soy and almonds through HeadSpace Solid Phase MicroExtraction (HS-SPME) and GasChromatography-MassSpectrometry (GC-MS)

### Sample preparation

10 mL of the yoghurt-like product on the basis of soy and almonds (sampled product) of example 2 was pipetted in a CombiPal extraction vial, in which 2.0 g NaCl was already present (pro analysis NaCl, Merck, Darmstadt, Germany). 20 µL n-Dodecane (26,22 µg/mL; Sigma-Aldrich, St. Louis, MO, USA) was added as an internal standard, as a control for the extraction. Afterwards, the extraction vial was immediately sealed with a magnetic bimetal crimp cap with silicone/Teflon septum.

### Extraction

Extraction of the volatile components happened by HS-SPME and was automated through the use of a CombiPal autosampler (CTC Analytics, Zwingen, Zwitserland).

Some details: Extraction fiber: 65 µm PDMS/DVB (Supelco, Bellefonte, PA, USA). Extraction time and temperature: 60 minutes at 80°C. Agitator (autosampler): 250 rpm

### GC-MS details and conditions

GC: Ultra Trace gas chromatograph (Interscience, Louvain-la-Neuve, Belgium). Thermal desorption: 250°C, 3 minutes, splitless injection. Capillary column: RTX-1 (Restek Corporation, Bellefonte, PA, USA).

Oven programme: 40°C (3 minutes at 40 °C), temperature raise speed: 6°C/minute, endtemperature: 250°C

MS: Dual Stage Quadrupool (DSQI, Interscience, Louvain-la-Neuve, Belgium); electron ionisation (EI: 70 eV); source temperature: 240°C; electron multiplier: 1400 V; Full Scan detection (40-250), 3.5 scans/s; selected ion monitoring: m/z=108, 121, 122, 136; SIM width: 1; dwell time: 100 ms.

### Semi-quantitative determination of pyrazines

Known concentrations of pyrazine reference components (2,6-dimethylpyrazine (96 µg/L), 2-ethyl-3-methylpyrazine (40 µg/L), and 2-ethyl-3(5 or 6)-dimethylpyrazine (120 µg/L)) were subjected to the same extraction and detection procedure as the sample. Semi-quantitative concentrations of the pyrazines in the samples were determined according to the following: Cₓ=C_{RC} . Aₓ/A_{RC} (Cₓ: concentration of the pyrazine to be determined; C_{RC}: concentration of the pyrazine reference component; Aₓ: peak area of the pyrazine to be determined; A_{RC}: peak-area of the pyrazine reference component). Peak-areas were determined on basis of extract of m/z=108 (2,6-dimethylpyrazine); m/z=121,122 (2-ethyl-3-methylpyrazine); m/z=136 [2-ethyl-3,(5 or 6)-dimethylpyrazine] from the SIM-chromatograms.

### Results

No detectable pyrazines were found in the sampled product obtained in example 2.

### Example 5: Sensory and mechanic characteristics:

The following parameters or sensorial characteristics were tested for the product obtained from example 2

| **Relevant descriptors** | **Extreme scores** | | |
|---|---|---|---|
| | *1* | *5* | *9* |
| Colour | white | | yellow |
| Almond flavour intensity | no almond flavour | | extreme almond flavour |
| Almond taste intensity | no almond taste | | extreme almond taste |
| Soy taste | no soy/beany taste | | extreme soy, beany taste |
| Oxidation | no cardboard flavour/taste | | extreme cardboard flavour |
| Acidity | not sour | mild sour | very sour |
| Sweetness | not sweet | | very sweet |
| Structure in cup | no lumps | | very lumpy |
| Mouthfeel | thin, watery | | thick viscous |

**Results:**

| **Descriptor** | **Score (moment of release)** | **Description (moment of release)** | **Score (moment of consumptio n)** | **Description (moment of consumption)** | **Score (end of shelf-life)** | **Description (end of shelf life; 46 days)** |
|---|---|---|---|---|---|---|
| *Colour* | **3** | ivory-white, slightly yellow | **3** | ivory-white, slightly yellow | **3** | ivory-white, slightly yellow |
| *Almond flavour intensity* | **7** | high flavour intensity | **7** | high flavour intensity | **7** | high flavour intensity |
| *Almond taste intensity* | **7** | high taste intensity | **7** | high taste intensity | **7** | high taste intensity |
| *Soy taste* | **1** | no soy taste | **1** | no soy taste | **3** | few soy taste |
| *Oxidation* | **1** | no oxidation | **1** | no oxidation | **3** | a bit oxidation |
| *Acidity* | **5** | mild sour | **5** | mild sour | **5** | mild sour |
| *Sweetness* | **3** | a little sweet | **3** | a little sweet | **3** | a little sweet |
| *Structure in cup* | **3** | very few lumps | **3** | very few lumps | **5** | few lumps |
| *Mouthfeel* | 5 | smooth | **5** | smooth | **7** | a little thick |

From the above sensory test, it is clear that a product is obtained having a high almond taste and flavour intensity. Without wanting to be bound by any particular theory, said high almond taste and flavour intensity is believed to be caused by the use of almond paste having a very small particle size (e.g. <30um), thereby releasing the almond oil from the almonds, and by avoiding fermentation of the almond component together with the soy milk, which reduces and changes the almond taste.

The viscosity of the products obtained in example 2 was further evaluated. The yoghurt-like products have a viscosity expressed as a Bostwick value (movement of the product in mm 20 sec after 'opening of the gate', measured at 7 °C) of between 50 and 75 mm (1 day after production (chilled storage)) and of between 30 and 55 mm (3 weeks after production (chilled storage)).

The colour of the yoghurt-like product obtained in example 2 was also determined using Lab values:
- L: between 80 and 83,
- a: between -1 and 2,
- b: between 8 and 13.
Upon production, the b value was in the range of 12-13, while after 7 weeks of chilled storage, the b value dropped to 8-9.

## Claims

1. A vegetable fermented product having a concentration of pyrazines of below 30 ppb comprising:
- a total protein content of between 3.5 and 4.5 % w/w;
- a total fat content of between 2 and 4 % w/w; and
- a total carbohydrate content of between 2 and 4 % w/w;
wherein said product is produced by a method comprising the steps of:
a) fermenting soy milk with lactic acid bacteria,
b) providing non-roasted almond paste, and
c) mixing said almond paste with the fermented soy milk obtained in step a) in a ratio of 97.5 to 99.5 % w/w of fermented soy milk to 0.5 to 2.5 % w/w of non-roasted almond paste, wherein after mixing step c) no further fermentation step is applied to the product.

2. The product according to claim 1, comprising a blanched, non-roasted almond paste.

3. The product according to claim 1 or 2, having an ivory or ivory-white colour, with the following Lab colour values:
- L: between 80 and 83,
- a: between -1 and 2,
- b: between 8 and 13.

4. The product according to any one of claims 1 to 3, characterized as having a benzaldehyde concentration of between 1000 and 4000 µg/100g, preferably between 2000 and 3000 µg/100g, most preferably between 2400 and 2800 µg/100g.

5. The product according to any one of claims 1 to 4, having a sucrose content of between 0.5 and 3% w/w, preferably between 0.5 and 2.5% w/w.

6. The product according to any one of claims 1 to 5, having a viscosity expressed as a Bostwick value, which is the movement of the product in mm 20 sec after "opening of the gate", measured at 7°C, of between 50 and 75 mm, 1 day after production and of between 30 and 55 mm, 3 weeks after production.

7. A vegetable fermented product having a concentration of pyrazines of below 30 ppb comprising: - a total protein content of between 2% and 3.5% w/w;
- a total fat content of between 1 and 3 % w/w; and
- a total carbohydrate content of between 1 and 3 % w/w,
wherein said product is produced by a method comprising the steps of:
a) fermenting soy milk with lactic acid bacteria,
b) providing non-roasted almond paste, and
c) mixing said almond paste with the fermented soy milk obtained in step a) in a ratio of 97.5 to 99.5 % w/w of fermented soy milk to 0.5 to 2.5 % w/w of non-roasted almond paste, wherein after mixing step c) no further fermentation step is applied to the product.

8. The product according to any one of claims 1 to 7, additionally comprising one or more ingredients selected from the group comprising: calcium sources, stabilizers, antioxidants, acidity regulators, sweeteners, flavourings, vitamins, health-related supplements, and salts.

9. The product according to any one of claims 1 to 8, comprising calcium at a concentration of 120 ppm.

10. The product according to any one of claims 1 to 9, wherein said non-roasted almond paste is obtained by blanching the almonds and subsequently grinding the blanched almonds to a volume weighed average particle diameter of below 30 µm.

11. The product according to any one of claims 1 to 10, wherein said non-roasted almonds are dried after blanching to a moisture content of between 4% and 7%, preferably between 5% and 6%, prior to the grinding step.

12. A method for producing a vegetable fermented product comprising the steps of:
a) fermenting a soy milk with lactic acid bacteria,
b) providing a non-roasted, preferably blanched, almond paste, and
c) mixing said almond paste with the fermented soy milk obtained in step a) in a ratio of 97.5 to 99.5 % w/w of fermented soy milk to 0.5 to 2.5 % w/w almond paste, wherein after mixing step c) no further fermentation step is applied to the product.

13. The method according to claim 12, for producing a vegetable fermented product comprising:
- a total protein content of between 3.5 and 4.5 % w/w;
- a total fat content of between 2 and 4 % w/w; and
- a total carbohydrate content of between 2 and 4 % w/w, or
for producing a vegetable fermented product comprising:
- a total protein content of between 2% and 3.5% w/w;
- a total fat content of between 1 and 3 % w/w; and
- a total carbohydrate content of between 1 and 3 % w/w.

14. The method according to claim 12 or 13, wherein step b) comprises the steps of:
b1) blanching non-roasted almonds, and
b2) grinding the blanched almonds such as to form a blanched, non-roasted almond paste, preferably an almond paste having a volume weighed average particle diameter of below 30 µm.

15. The method according to any one of claims 12 to 14, wherein the blanched, non-roasted almonds are dried after blanching to a moisture content of between 4% and 7%, preferably between 5% and 6%, prior to the grinding step.

16. The method according to any one of claims 12 to 15, wherein in step c) additionally one or more ingredients selected from the group comprising: calcium sources, stabilizers, antioxidants, acidity regulators, sweeteners, flavourings, vitamins, health-related supplements, and salts, are mixed with the fermented soy milk.

## Patentansprüche

1. Pflanzliches fermentiertes Produkt mit einer Konzentration von Pyrazinen von unter 30 ppb, umfassend:
- einen Gesamtproteingehalt von zwischen 3,5 und 4,5 Gew./Gew.-%;
- einen Gesamtfettgehalt von zwischen 2 und 4 Gew./Gew.-%; und
- einen Gesamtkohlenhydratgehalt von zwischen 2 und 4 Gew./Gew.-%;
wobei das Produkt durch ein Verfahren hergestellt ist, das die Schritte umfasst:
a) Fermentieren von Sojamilch mit Milchsäurebakterien,
b) Bereitstellen von nichtgerösteter Mandelpaste und
c) Mischen der Mandelpaste mit der bei Schritt a) erhaltenen fermentierten Sojamilch in einem Verhältnis von 97,5 bis 99,5 Gew./Gew.-% an fermentierter Sojamilch zu 0,5 bis 2,5 Gew./Gew.-% an nichtgerösteter Mandelpaste, wobei nach dem Schritt des Mischens c) kein weiterer Fermentationsschritt an dem Produkt durchgeführt wird.

2. Produkt gemäß Anspruch 1, umfassend eine blanchierte nichtgeröstete Mandelpaste.

3. Produkt gemäß Anspruch 1 oder 2 mit einer Elfenbein- oder elfenbeinweißen Farbe mit den folgenden Lab-Farbwerten:
- L: zwischen 80 und 83,
- a: zwischen -1 und 2,
- b: zwischen 8 und 13.

4. Produkt gemäß einem der Ansprüche 1 bis 3, **gekennzeichnet durch** eine Benzaldehydkonzentration von zwischen 1000 und 4000 µg/100 g, vorzugsweise zwischen 2000 und 3000 µg/100 g, höchst bevorzugt zwischen 2400 und 2800 µg/100 g.

5. Produkt gemäß einem der Ansprüche 1 bis 4, **gekennzeichnet durch** eine Saccharosegehalt von zwischen 0,5 und 3 Gew./Gew.-%, vorzugsweise zwischen 0,5 und 2,5 Gew./Gew.-%.

6. Produkt gemäß einem der Ansprüche 1 bis 5 mit einer Viskosität, ausgedrückt als Bostwick-Wert, der die Bewegung des Produkts in mm 20 sec nach dem "Öffnen des Tors", gemessen bei 7 °C, von zwischen 50 und 75 mm 1 Tag nach der Herstellung und von zwischen 30 und 55 mm 3 Wochen nach der Herstellung aufweist.

7. Pflanzliches fermentiertes Produkt mit einer Konzentration von Pyrazinen von unter 30 ppb, umfassend:
- einen Gesamtproteingehalt von zwischen 2 Gew./Gew.-% und 3,5 Gew./Gew.-%;
- einen Gesamtfettgehalt von zwischen 1 und 3 Gew./Gew.-%; und
- einen Gesamtkohlenhydratgehalt von zwischen 1 und 3 Gew./Gew.-%;
wobei das Produkt durch ein Verfahren hergestellt ist, das die Schritte umfasst:
a) Fermentieren von Sojamilch mit Milchsäurebakterien,
b) Bereitstellen von nichtgerösteter Mandelpaste und
c) Mischen der Mandelpaste mit der bei Schritt a) erhaltenen fermentierten Sojamilch in einem Verhältnis von 97,5 bis 99,5 Gew./Gew.-% an fermentierter Sojamilch zu 0,5 bis 2,5 Gew./Gew.-% an nichtgerösteter Mandelpaste, wobei nach dem Schritt des Mischens c) kein weiterer Fermentationsschritt an dem Produkt durchgeführt wird.

8. Produkt gemäß einem der Ansprüche 1 bis 7, zusätzlich umfassend einen oder mehrere Inhaltsstoffe ausgewählt aus der Gruppe umfassend:
Calciumquellen, Stabilisatoren, Antioxidationsmittel, Säureregulatoren, Süßstoffe, Aromastoffe, Vitamine, gesundheitsbezogene Ergänzungsmittel und Salze.

9. Produkt gemäß einem der Ansprüche 1 bis 8, umfassend Calcium mit einer Konzentration von 120 ppm.

10. Produkt gemäß einem der Ansprüche 1 bis 9, wobei die nichtgeröstete Mandelpaste durch Blanchieren der Mandeln und nachfolgendes Mahlen der blanchierten Mandeln auf einen volumengewichtet-mittleren Durchmesser von unter 30 µm erhalten ist.

11. Produkt gemäß einem der Ansprüche 1 bis 10, wobei die nichtgerösteten Mandeln nach dem Blanchieren vor dem Mahlschritt auf einen Feuchtegehalt von zwischen 4 % und 7 %, vorzugsweise zwischen 5 % und 6 %, getrocknet werden.

12. Verfahren zur Herstellung eines pflanzlichen fermentierten Produkts, umfassend die Schritte:
a) Fermentieren einer Sojamilch mit Milchsäurebakterien,
b) Bereitstellen einer nichtgerösteten, vorzugsweise blanchierten, Mandelpaste und
c) Mischen der Mandelpaste mit der bei Schritt a) erhaltenen fermentierten Sojamilch in einem Verhältnis von 97,5 bis 99,5 Gew./Gew.-% an fermentierter Sojamilch zu 0,5 bis 2,5 Gew./Gew.-% an Mandelpaste, wobei nach dem Schritt des Mischens c) kein weiterer Fermentationsschritt an dem Produkt durchgeführt wird.

13. Verfahren gemäß Anspruch 12 zur Herstellung eines pflanzlichen fermentierten Produkts umfassend:
- einen Gesamtproteingehalt von zwischen 3,5 und 4,5 Gew./Gew.-%;
- einen Gesamtfettgehalt von zwischen 2 und 4 Gew./Gew.-%; und
- einen Gesamtkohlenhydratgehalt von zwischen 2 und 4 Gew./Gew.-%; oder
zur Herstellung eines pflanzlichen fermentierten Produkts umfassend:
- einen Gesamtproteingehalt von zwischen 2 Gew./Gew.-% und 3,5 Gew./Gew.-%;
- einen Gesamtfettgehalt von zwischen 1 und 3 Gew./Gew.-%; und
- einen Gesamtkohlenhydratgehalt von zwischen 1 und 3 Gew./Gew.-%.

14. Verfahren gemäß Anspruch 12 oder 13, wobei Schritt b) die Schritte umfasst:
b1) Blanchieren von nichtgerösteten Mandeln und
b2) Mahlen der blanchierten Mandeln, um eine blanchierte nichtgeröstete Mandelpaste zu bilden, vorzugsweise eine Mandelpaste mit einem volumengewichtet-mittleren Partikeldurchmesser von unter 30 µm.

15. Verfahren gemäß einem der Ansprüche 12 bis 14, wobei die blanchierten nichtgerösteten Mandeln nach dem Blanchieren vor dem Mahlschritt auf einen Feuchtegehalt von zwischen 4 % und 7 %, vorzugsweise zwischen 5 % und 6 %, getrocknet werden.

16. Verfahren gemäß einem der Ansprüche 12 bis 15, wobei bei Schritt c) zusätzlich ein oder mehrere Inhaltsstoffe ausgewählt aus der Gruppe umfassend:
Calciumquellen, Stabilisatoren, Antioxidationsmittel, Säureregulatoren, Süßstoffe, Aromastoffe, Vitamine, gesundheitsbezogene Ergänzungsmittel und Salze mit der fermentierten Sojamilch gemischt werden.

## Revendications

1. Produit végétal fermenté ayant une concentration de pyrazines au-dessous de 30 ppb comprenant :
- une teneur en protéines totales comprise entre 3,5 et 4,5 % p/p ;
- une teneur en matières grasses totales comprise entre 2 et 4 % p/p ; et
- une teneur en glucides totaux comprise entre 2 et 4 % p/p ;
ledit produit étant produit par un procédé comprenant les étapes consistant à :
a) fermenter du lait de soja avec des bactéries lactiques,
b) fournir de la pâte d'amandes non grillées et
c) mélanger ladite pâte d'amandes avec le lait de soja fermenté obtenu dans l'étape a) en un rapport de 97,5 à 99,5 % p/p de lait de soja fermenté pour 0,5 à 2,5 % p/p de pâte d'amandes non grillées,
dans lequel après l'étape de mélange c) aucune autre étape de fermentation n'ést appliquée au produit.

2. Produit selon la revendication 1, comprenant une pâte d'amandes blanchies non grillées.

3. Produit selon la revendication 1 ou 2, ayant une couleur ivoire ou blanc ivoire, présentant les valeurs de couleur Lab suivantes :
- L : entre 80 et 83,
- a : entre -1 et 2,
- b : entre 8 et 13.

4. Produit selon l'une quelconque des revendications 1 à 3, **caractérisé en ce qu'**il a une concentration en benzaldéhyde comprise entre 1000 et 4000 µg/100 g, de préférence entre 2000 et 3000 µg/100 g, le plus préférablement entre 2400 et 2800 µg/100 g.

5. Produit selon l'une quelconque des revendications 1 à 4, ayant une teneur en sucrose comprise entre 0,5 et 3 % p/p, de préférence entre 0,5 et 2,5 % p/p.

6. Produit selon l'une quelconque des revendications 1 à 5, ayant une viscosité exprimée sous forme d'une valeur selon Bostwick, qui est l'avancement du produit en mm 20 s après « l'ouverture de la porte », mesurée à 7 °C, comprise entre 50 et 75 mm, 1 jour après la production et comprise entre 30 et 55 mm, 3 semaines après la production.

7. Produit végétal fermenté ayant une concentration de pyrazines au-dessous de 30 ppb comprenant :
- une teneur en protéines totales comprise entre 2 % et 3,5 % p/p ;
- une teneur en matières grasses totales comprise entre 1 et 3 % p/p ; et
- une teneur en glucides totaux comprise entre 1 et 3 % p/p,
ledit produit étant produit par un procédé comprenant les étapes consistant à :
a) fermenter du lait de soja avec des bactéries lactiques,
b) fournir de la pâte d'amandes non grillées et
c) mélanger ladite pâte d'amandes avec le lait de soja fermenté obtenu dans l'étape a) en un rapport de 97,5 à 99,5 % p/p de lait de soja fermenté pour 0,5 à 2,5 % p/p de pâte d'amandes non grillées,
dans lequel après l'étape de mélange c) aucune autre étape de fermentation n'ést appliquée au produit.

8. Produit selon l'une quelconque des revendications 1 à 7, comprenant de plus un ou plusieurs ingrédients choisis dans le groupe comprenant : des sources de calcium, des stabilisants, des antioxydants, des correcteurs d'acidité, des édulcorants, des arômes, des vitamines, des compléments liés à la santé et des sels.

9. Produit selon l'une quelconque des revendications 1 à 8, comprenant du calcium en une concentration de 120 ppm.

10. Produit selon l'une quelconque des revendications 1 à 9, dans lequel ladite pâte d'amandes non grillées est obtenue par le blanchiment des amandes et par la suite le broyage des amandes blanchies à un diamètre moyen des particules pondéré en fonction du volume au-dessous de 30 µm.

11. Produit selon l'une quelconque des revendications 1 à 10, dans lequel lesdites amandes non grillées sont séchées après avoir été blanchies à une teneur en humidité comprise entre 4 % et 7 %, de préférence entre 5 % et 6 %, avant l'étape de broyage.

12. Procédé pour la production d'un produit végétal fermenté comprenant les étapes consistant à :
a) fermenter un lait de soja avec des bactéries lactiques,
b) fournir une pâte d'amandes non grillées, de préférence blanchies, et
c) mélanger ladite pâte d'amandes avec le lait de soja fermenté obtenu dans l'étape a) en un rapport de 97,5 à 99,5 % p/p de lait de soja fermenté pour 0,5 à 2,5 % p/p de pâte d'amandes,
dans lequel après l'étape de mélange c) aucune autre étape de fermentation n'est appliquée au produit .

13. Procédé selon la revendication 12,
pour la production d'un produit végétal fermenté comprenant :
- une teneur en protéines totales comprise entre 3,5 et 4,5 % p/p ;
- une teneur en matières grasses totales comprise entre 2 et 4 % p/p ; et
- une teneur en glucides totaux comprise entre 2 et 4 % p/p ou
pour la production d'un produit végétal fermenté comprenant :
- une teneur en protéines totales comprise entre 2 % et 3,5 % p/p ;
- une teneur en matières grasses totales comprise entre 1 et 3 % p/p ; et
- une teneur en glucides totaux comprise entre 1 et 3 % p/p.

14. Procédé selon la revendication 12 ou 13, dans lequel l'étape b) comprend les étapes consistant à :
b1) blanchir des amandes non grillées et
b2) broyer les amandes blanchies de manière à former une pâte d'amandes blanchies non grillées, de préférence une pâte d'amandes ayant un diamètre moyen des particules pondéré en fonction du volume au-dessous de 30 µm.

15. Procédé selon l'une quelconque des revendications 12 à 14, dans lequel les amandes blanchies non grillées sont séchées après avoir été blanchies à une teneur en humidité comprise entre 4 % et 7 %, de préférence entre 5 % et 6 %, avant l'étape de broyage.

16. Procédé selon l'une quelconque des revendications 12 à 15, dans lequel dans l'étape c) de plus un ou plusieurs ingrédients choisis dans le groupe comprenant : des sources de calcium, des stabilisants, des antioxydants, des correcteurs d'acidité, des édulcorants, des arômes, des vitamines, des compléments liés à la santé et des sels, sont mélangés avec le lait de soja fermenté.
